# EUROPÄISCHE PATENTSCHRIFT

(11) **EP 1 186 500 B1**
(45) Veröffentlichungstag und Bekanntmachung des Hinweises auf die Patenterteilung: **25.01.2006**
(21) Anmeldenummer: 01121536.5
(22) Anmeldetag: 10.09.2001
(51) Int. Cl.: B61D 25/00, B60J 1/10

(54) **Schienenfahrzeug mit Fenstern**
Railway vehicle with windows
Véhicule ferroviaire avec fenêtres

(30) Priorität: 09.09.2000 DE 20015632 U
(43) Veröffentlichungstag der Anmeldung: 13.03.2002
(73) Patentinhaber: Bombardier Transportation GmbH, 13627 Berlin (DE)
(72) Erfinder: Hanga, Folker, 86603 Donauwörth (DE)
(74) Vertreter: Cohausz & Florack

(56) Entgegenhaltungen:
- EP-A- 0 114 257
- EP-A- 0 515 953
- DE-A- 3 810 524
- US-A- 5 915 780

## Beschreibung

Die Erfindung betrifft ein Schienenfahrzeug gemäß dem Oberbegriff des ersten Anspruchs.

Es ist bei Schienenfahrzeugen ganz allgemein bekannt, in Seitenwänden von Wagenkästen Fensteröffnungen vorzusehen, die sich in Wagenkasten-Längsrichtung aneinander anschließen und nur durch senkrecht oder geneigt verlaufende Fensterstiele voneinander getrennt sind. Die Fensteröffnungen weisen dabei gegenüber der Außenfläche der Wagenkasten-Seitenwand zurückgesetzte Haltestege auf, an welchen die jeweilige Fensterscheibe mittels Klebstoff festgesetzt wird. Die Profilierung für alle vier Seiten des Umfangsrandes der Fensteröffnungen ist dabei jeweils identisch (EP 0 102 526 A1).

Daneben ist es auch ganz allgemein bekannt, bei Schienenfahrzeugen die Fensterscheiben in umlaufenden gummielastischen Rahmen zu halten, welche ihrerseits mit einer radial nach außen offenen Nut in einen umlaufenden angepaßten Haltesteg eingreifen, welcher in jeder Fensteröffnung umlaufend radial nach innen gerichtet ist (DE 44 38 266 A1).

Der Erfindung liegt die Aufgabe zugrunde, bei einem Schienenfahrzeug Maßnahmen zu treffen, durch welche in ein und derselben Fensteröffnung Fensterscheiben sowohl eingeklebt als auch wahlweise mittels eines gummielastischen Rahmens festgesetzt werden können, wobei bei geklebter Ausführung die einander zugewandten Randabschnitte der Fensterscheiben lediglich durch einen Spalt getrennt einander gegenüber stehen können.

Die Lösung dieser Aufgabe erfolgt gemäß der Erfindung durch die Merkmale des ersten Anspruchs.

Durch den Aufbau des Wagenkastens im Bereich der Fensteröffnungen gemäß der Erfindung sind nicht nur die für das Aufkleben der Fensterscheiben vorgesehenen, radial nach innen gerichteten Haltestege gegenüber der Außenfläche der betreffenden Seitenwand um die Dicke der gesamten Fensteranordnung und der Kleberschicht zurückgesetzt, vielmehr ist auch der jeweilige Fensterstiel zwischen benachbarten Fenstern um diesen Betrag gegenüber der Außenfläche der Wagenkasten-Seitenwand zurückgesetzt. Dabei ist aber der betreffende Fensterstiel an seinen den zugehörigen Fenstern zugewandten, in Wagenkasten-Längsrichtung weisenden Seitenflanken ebenfalls mit einem freistehenden Haltesteg-Abschnitt ausgestattet. Die quer zur Wagenkasten-Längsrichtung weisende, nach außen gewandte Seitenfläche des gesamten Fensterstiels liegt somit in der Ebene, in welcher auch die äußeren Seitenflächen der den benachbarten Fensteröffnungen zugeordneten Haltestege insgesamt liegen. Dadurch können die benachbarten Fensterscheiben im Bereich ihrer einander zugewandten Umfangsrand-Abschnitte außerhalb des jeweils zugehörigen Abschnittes des betreffenden Haltesteges auf die äußere Seitenfläche des Fensterstiels aufgeklebt werden. Die einander zugewandten Abschnitte der Fensterscheiben-Umfangsränder können hierdurch eng aneinander herangeführt werden, wobei auch die Kleberschicht auf der Seitenfläche des betreffenden Fensterstiels nahe dem zugehörigen Abschnitt des Fensterscheiben-Umfangsrandes angeordnet werden kann.

Soll dagegen die Halterung der Fensterscheiben mit jeweils einem gummielastischen Rahmen erfolgen, dann kann derselbe mit seiner umlaufenden, radial nach außen gerichteten offenen Nut auf den auch am jeweiligen Fensterstiel vorgesehenen Haltesteg aufgesteckt und die jeweilige Fensterscheibe sicher in der betreffenden Fensteröffnung gehalten werden. Zur Vermeidung von Luftströmungsgeräuschen im Raum zwischen den dann voneinander weit beabstandeten Abschnitten der Gummirahmen im Bereich des jeweiligen Fensterstiels ist es dann zweckmäßig, eine Verblendleiste vorzusehen, welche den Raum zwischen diesen Abschnitten des gummielastischen Rahmens abdeckt.

Im übrigen ist es zweckmäßig, die Fensterscheiben jeweils in einer Ebene anzuordnen, die mit der Außenfläche der zugehörigen Seitenwand stufenlos abschließt, um Strömungsgeräusche bei schneller Fahrt des Schienenfahrzeugs zu minimieren. Dabei ist es insbesondere bei aufgeklebten Fensterscheiben vorteilhaft, den notwendigen Spalt zwischen der Rücksprungflanke und dem benachbarten Umfangsrand der Fensterscheiben bzw. zwischen den beiden Fensterscheiben von aufeinander folgenden Fenstern mit einer elastischen Dichtungsmasse auszufüllen, die stufenlos an die Außenfläche der betreffenden Wagenkasten-Seitenwand wie auch der Fensterflächen anschließt.

Die Erfindung ist nachfolgend anhand eines Ausführungsbeispiels näher erläutert.

Es zeigen:
- Fig. 1: eine Seitenansicht eines Schienenfahrzeuges mit in der Seitenwand eines Wagenkastens vorgesehenen, nebeneinander angeordneten Fenstern,
- Fig. 2: eine vergrößerte Teilansicht im Bereich von Fenstern,
- Fig. 3: eine Querschnittsdarstellung durch teilweise dargestellte Fensterscheiben im Bereich einer Wagenkasten-Seitenwand und eines Fensterstiels bei aufgeklebter Fensterscheibe sowie
- Fig. 4: eine Schnittdarstellung durch ein Fenster im Bereich einer Wagenkasten-Seitenwand mit einer mittels eines gummielastischen Rahmens darin gehaltenen Fensterscheibe.

Ein Schienenfahrzeug weist einen Wagenkasten 1 mit einer Tür 2, Fenstern 3 und Führerstand 4 auf, wobei der Wagenkasten 1 auf Laufwerken 5 federelastisch abgestützt ist.

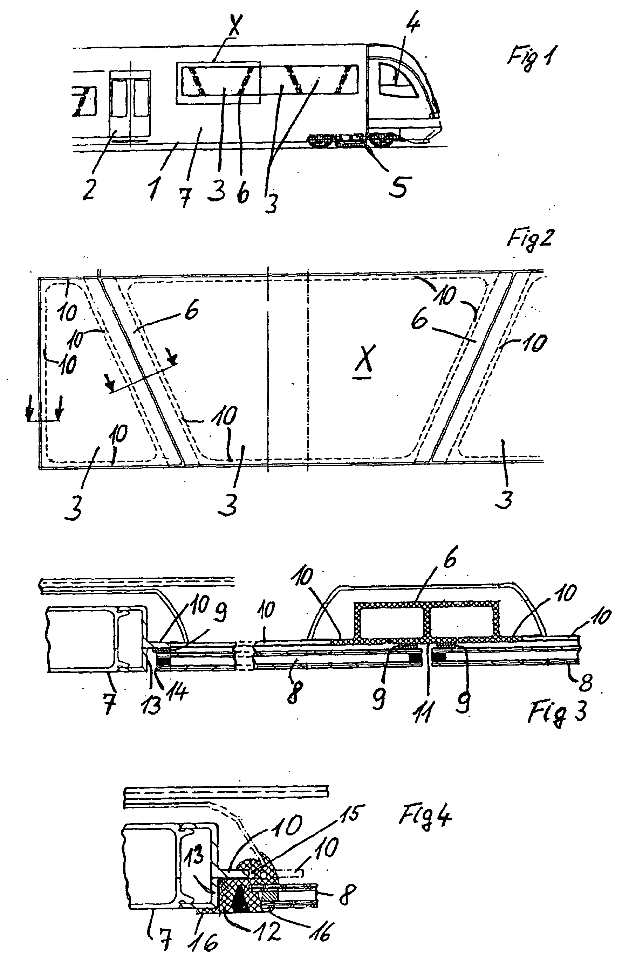

Zwischen den einzelnen Fenstern 3 befinden sich, wie insbesondere aus der vergrößerten Teildarstellung gemäß Fig. 2 hervorgeht, von unten nach oben, gegebenenfalls senkrecht, vorliegend jedoch in Wagenkasten-Längsrichtung geneigt verlaufende Fensterstiele 6. Die Fensterstiele sind wie die übrigen Teile der Fensteröffnungen fester Bestandteil der Seitenwände 7 des Wagenkastens 1. Den Fenstern 3 ist jeweils eine Fensterscheibe 8 in Isoliergiasscheibenaufbau zugeordnet. Die Fensterscheiben 8 können dabei wahlweise durch Einkleben oder mittels je eines gummielastischen Rahmens 12 und mittels eines gummielastischen Füllstücks 18 in der betreffenden Fensteröffnung gehalten werden. je nach Größe der Fensteröffnung könnte di Scheibe 8 auch Einscheibensicherheitsglas oder Einscheibenverbundglas sein. Das hängt von den Anforderungen bezüglich Schalldämmung/Wärmedämmung und Scheibenfestigkeit sowie Durchbiegung ab.

Um die Fensterscheiben 8 in den Fensteröffnungen der Wagenkasten-Seitenwand 7 halten zu können, ist jeder Fensteröffnung ein umlaufender Haltesteg 10 zugeordnet, der jeweils radial nach innen gerichtet ist sowie von der Seitenwand 7 und auch dem Fensterstiel 6 ausgeht. Die Haltestege 10 sind gegenüber der Außenseite der Seitenwände 7 um die Dicke der Fensterscheiben 8 und der zwischen der Innenseite der Fensterscheiben 8 und dem zugehörigen Haltesteg 10 angeordneten Schichtdicke des Klebstoffs 9 zurückgesetzt. Dadurch kommt die Außenseite der Fensterscheiben 8 in eine Flucht mit der Außenkontur der Seitenwände 7. Der Haltesteg10 ist demnach im Ausführungsbeispiel zur Mittelebene der betreffenden Seitenwand 7 zum Wagenkasten-Inneren hin eingerückt. Dementsprechend ist der Haltesteg 10 auch gegenüber der Innenfläche der Seitenwand 7 nach außen stufig abgesetzt.

Die nach außen weisende Seitenfläche 11 der Fensterstiele 6 schließt sich stufenlos an die äußeren Flanken der zugehörigen Haltestege 10 an. Die Außenfläche 11 ist somit wie die Haltestege 10 gegenüber der Außenfläche der Seitenwände 7 zurückgesetzt, wobei ein stufenloser Übergang von den Haltestegen 10 zur Außenfläche 11 gegeben ist.

Durch die besondere Zuordnung der Haltestege 10 in der Fensteröffnung und insbesondere am jeweiligen Fensterstiel 6 ergibt sich die Möglichkeit, ohne konstruktive Änderungen eine Fensterscheibe 8 durch Kleben mittels Klebstoff 9 oder unter Zuhilfenahme eines die jeweilige Scheibe rundum umschließenden gummielastischen Rahmens 12 in der Fensteröffnung 3 festzusetzen.

Bei Verwendung von Klebstoff 9 wird derselbe in ausreichender Schichtdicke auf der Innenseite der betreffenden Scheibe 8 auf den äußeren Randbereich aufgetragen und die so vorbereitete Fensterscheibe 8 in die Fensteröffnung von außen eingesetzt. Der Klebstoff 9 kommt dadurch in den Bereichen, in welchen der Haltesteg 10 unmittelbar von der Seitenwand 7 ausgeht, mit der Außenflanke des Haltesteges 10 in Klebeverbindung.

Da die Fensterscheibe 8 jedoch bis in den Mittenbereich des Fensterstiels 6 reicht, kommt dort der Kleber 9 nicht mit dem zugeordneten Abschnitt des Haltesteges 10, sondern mit dem in Fahrtrichtung mittleren Bereich der Seitenfläche 11 in Anlage. Die aneinander angrenzenden Fensterscheiben 8 überdecken somit den gemeinsamen Fensterstiel 6 jeweils bis annähernd zu dessen Mitte, wobei aufgrund der Schichtdicke des Klebstoffs 9 außer im Bereich des Klebers 9 keine Berührung mit dem Fensterstiel 6 eintritt. Der zwischen der Rücksprungflanke 13 und dem äußeren Umfangsrand 14 gebildete Spalt wird dann ebenso wie der zwischen benachbarten Fensterscheiben 8 verbleibende Spalt mit einer nicht dargestellten, plan mit den angrenzenden Flächen abschließenden Dichtungsmasse ausgefüllt. Die Rücksprungflanke 13 verbindet die Außenseite der Seitenwand 7 mit dem Haltesteg 10.

Wird dagegen ein gummielastischer Rahmen 12 für die Befestigung der Fensterscheiben 8 verwendet, dann braucht derselbe nur mit einer umlaufenden, radial nach außen gerichteten Nut 15 versehen zu werden, mit welcher der gummielastische Rahmen 12 bei der Montage umlaufend auf den Haltesteg 10, also auch im Bereich des Fensterstiels 6 aufgesteckt wird. Dabei ist auch hier der Haltesteg 10 soweit gegenüber der Außenseite der Wagenkasten-Seitenwand 7 zurückgesetzt, daß die Außenseite der Fensterscheibe 8 in einer Ebene mit der Wagenkasten-Außenfront liegt. Zudem verschließt der Rahmen 12 den radialen Spalt zwischen der Fensterscheibe 8 und der Rücksprungflanke 13, so daß zusätzliche Dichtungsmittel zwischen der Seitenwand 7 und der Fensterscheibe 8 nicht erforderlich sind. Dabei kann der Rahmen 12 auch noch mit radial gerichteten Dichtlippen 16 ausgestattet sein, die bei sehr geringer Materialstärke einerseits die Außenseite der Seitenwand 7 und andererseits die Außenfläche der Scheibe 8 übergreifen und so zum dichtenden Abschluß vom Rahmen 12 zur Seitenwand 7 bzw. zur Fensterscheibe 8 hin beitragen. Im Bereich des Fensterstiels 6 verbleibt in diesem Falle zwischen den benachbarten Abschnitten der Rahmen 12 der beiden benachbarten Fensterscheiben 8 ein der Grundbreite des Fensterstiels 6 entsprechender Freiraum, der mittels einer angepaßten Verblendleiste verschlossen werden kann, wobei dann der betreffende Abschnitt der radial nach außen gerichteten Lippendichtung 16 in dichtende Anlage mit der Außenseite der Verblendleiste treten kann.

Es ist somit eine auf die Bedürfnisse des jeweiligen Kunden abstimmbare Befestigungsmöglichkeit für die Fensterscheiben 8 möglich, ohne an der Ausstattung des Wagenkastens Änderungen vornehmen zu müssen.

## Patentansprüche

1. Schienenfahrzeug mit einem Wagenkasten (1), in dessen Seitenwänden (7) in Wagenkasten-Längsrichtung hintereinander angeordnete Fensteröffnungen vorgesehen sind, sowie jeweils benachbarte Fensteröffnungen durch einen von oben nach unten laufenden Fensterstiel (6) voneinander getrennt sind und die Seitenwände (7) eine Wandstärke aufweisen, die größer als die Gesamtstärke einer jeweils eineFensteröffnung verschließenden Fensterscheibe (8) ist,
wobei in jeder Fensteröffnung ein umlaufender, radial nach innen gerichteter Haltesteg (10) vorgesehen ist,
wobei der Haltesteg (10) zumindest um die gesamte Stärke der Fensterscheibe (8) gegenüber der Außenfläche der Seitenwand zu deren Mittelebene hin zurück gesetzt ist,
wobei der Haltesteg (10) gegenüber der Innenfläche der Seitenwand (7) zu deren Mittelebene hin zurückgesetzt ist,
wobei die Außenseite (11) der Fensterstiele (6) ebenengleich mit den daran angeordneten Abschnitten der Haltestege (10) zurückgesetzt angeordnet sind, und wobei
entweder die jeweilige Fensterscheibe (8) den zugeordneten Haltesteg (10) rundum und dabei auch den Fensterstiel (6) weniger als bis zu dessen Mitte radial übergreift sowie entlang einer Seitenkante auf die Außenseite (11) des Fensterstieles (6) und entlang ihrer übrigen Seitenkanten auf den Haltesteg (10) aufgeklebt ist,
oder die jeweilige Fensterscheibe (8) von einem gummielastischen Rahmen (12) umschlossen ist, der mit einer umlaufenden, radial nach außen gerichteten Nut (15) versehen ist, in welche der Haltesteg (10) der zugeordneten Fensteröffnung umlaufend radial eingreift.

2. Schienenfahrzeug nach Anspruch 1, **dadurch gekennzeichnet, daß** die Fensterscheibe (8) in einer Ebene mit der Außenfläche der zugehörigen Wagenkasten-Seitenwand (7) liegt.

3. Schienenfahrzeug nach Anspruch 1 oder 2, **dadurch gekennzeichnet, daß** bei aufgeklebter Fensterscheibe (8) zwischen dem Umfangsrand der Fensterscheibe (8) und einer Rücksprungflanke (13) sowie zwischen benachbarten Fensterscheiben (8) im Bereich eines Fensterstiels (6) ein Spalt (17) vorgesehen ist, der mit einer Dichtungsmasse gefüllt ist.

4. Schienenfahrzeug nach wenigstens einem der Ansprüche 1 bis 3, **dadurch gekennzeichnet, daß** bei aufgeklebter Fensterscheibe (8) der Klebstoff (9) entfernt vom zugehörigen benachbarten Abschnitt des Haltesteges (10) auf der Außenfläche des Fensterstiels (6) angeordnet ist.

5. Schienenfahrzeug nach Anspruch 1 oder 2, **dadurch gekennzeichnet, daß** bei Anwendung eines gummielastischen Rahmens (12) zur Halterung der Fensterscheibe (8) im Bereich des Fensterstiels (6) zwischen Abschnitten von Rahmen (12) einander benachbarter Fensterscheiben (8, 8) eine Verblendleiste eingesetzt ist, deren Außenfläche in einer Ebene mit den Außenflächen der Fensterscheiben (8, 8) liegt.

## Claims

1. A rail vehicle with a vehicle body (1), the side walls (7) of which contain window openings that are successively arranged in the longitudinal direction of the vehicle body, with respectively adjacent window openings being separated from one another by a window post (6) that extends from the top to the bottom, and with the side walls (7) having a wall thickness that is greater than the total thickness of a window pane (8) that respectively closes a window opening,
wherein a peripheral, radially inward directed holding web (10) is provided in each window opening,
wherein the holding web (10) is set back relative to the outer surface of the side wall, namely toward its central plane, by at least the total thickness of the window pane (8),
wherein the holding web (10) is set back relative to the inner surface of the side wall (7), namely toward its central plane,
wherein the outer side (11) of the window posts (6) is set back such that it lies in the same plane as the sections of the holding webs (10) arranged thereon, and
wherein the respective window pane (8) either radially overlaps the periphery of the assigned holding web (10), as well as the window post (6), however, less than to the center thereof, and the window pane is bonded onto the outer side (11) of the window post (6) along one lateral edge and onto the holding web (10) along its remaining lateral edges or the respective window pane (8) is enclosed by an elastic rubber frame (12) with a peripheral groove (15) that is directed radially outward and into which the holding web (10) of the assigned window opening peripherally engages in the radial direction.

2. The rail vehicle according to claim 1, **characterized in that** the window pane (8) lies in the same plane as the outer surface of the assigned vehicle body side wall (7).

3. The rail vehicle according to claim 1 or 2, **characterized in that**, when the window pane (8) is bonded in position, a gap (17) remains between the peripheral edge of the window pane (8) and an offset flank (13), as well as between adjacent window panes (8) in the region of a window post (6), wherein said gap is filled with a sealing mass.

4. The rail vehicle according to at least one of claims 1 to 3, **characterized in that**, when the window pane (8) is bonded in position, the adhesive (9) is arranged distant from the assigned adjacent section of the holding web (10) on the outer surface of the window post (6).

5. The rail vehicle according to claim 1 or 2, **characterized in that**, when an elastic rubber frame (12) is utilized for holding the window pane (8), a cover strip is used in the region of the window post (6) between sections of frames (12) of adjacent window panes (8, 8), wherein the outer surface of the cover strip lies in the same plane as the outer surfaces of the window panes (8, 8).

## Revendications

1. Véhicule ferroviaire comportant un caisson de wagon (1) dans les parois latérales duquel (7) sont prévues des ouvertures de fenêtre disposées les unes derrière les autres dans le sens longitudinal du caisson de wagon et où les ouvertures de fenêtre respectivement voisines sont séparées par un montant de fenêtre (6) s'étendant vers le bas et les parois latérales (7) présentent une épaisseur de paroi qui est supérieure à l'épaisseur totale d'une vitre de fenêtre (8) fermant à chaque fois une ouverture de fenêtre,
dans lequel, dans chaque ouverture de fenêtre, il est prévu une traverse de retenue (10) périphérique orientée radialement vers l'intérieur,
la traverse de retenue (10) étant placée en retrait du moins à raison de l'épaisseur totale de la vitre de fenêtre (8) par rapport à la surface extérieure de la paroi latérale en direction du plan médian de cette dernière,
la traverse de retenue (10) étant placée en retrait par rapport à la surface intérieure de la paroi latérale (7) en direction du plan médian de cette dernière,
le côté extérieur (11) des montants de fenêtre (6) étant disposé en retrait sur le même plan que les sections disposées dessus des traverses de retenue (10) et dans lequel
soit la vitre respective de la fenêtre (8) empiète sur le tour de la traverse de retenue associée (10) et alors aussi radialement sur le montant de fenêtre (6) jusqu'à moins de sa moitié et est collée le long d'une arête latérale sur le côté extérieur (11) du montant de fenêtre (6) et le long de ses autres arêtes latérales sur la traverse de retenue (10),
soit la vitre respective de la fenêtre (8) est entourée d'un cadre de type caoutchouc élastique (12) qui est équipé d'une rainure périphérique (15) orientée radialement vers l'extérieur dans laquelle s'engrène radialement en périphérie la traverse de retenue (10) de l'ouverture de fenêtre associée.

2. Véhicule ferroviaire selon la revendication 1, **caractérisé en ce que** la vitre de fenêtre (8) se trouve dans un plan avec la surface extérieure de la paroi latérale correspondante du caisson de wagon (7).

3. Véhicule ferroviaire selon la revendication 1 ou 2, **caractérisé en ce que**, lorsque la vitre de fenêtre (8) est collée, il est prévu entre le bord périphérique de la vitre de fenêtre (8) et un flanc d'épaulement (13) ainsi qu'entre les vitres de fenêtre voisines (8), au niveau d'un montant de fenêtre (6), un intervalle (17) qui est rempli d'une masse d'étanchéité.

4. Véhicule ferroviaire selon au moins une des revendications 1 à 3, **caractérisé en ce que**, lorsque la vitre de fenêtre (8) est collée, la colle (9) enlevée de la section voisine correspondante de la traverse de retenue (10) est posée sur la surface extérieure du montant de fenêtre (6).

5. Véhicule ferroviaire selon la revendication 1 ou 2, **caractérisé en ce qu'**en cas d'utilisation d'un cadre de type caoutchouc élastique (12) pour maintenir la vitre de fenêtre (8) au niveau du montant de fenêtre (6), on insère entre les sections du cadre (12) de vitres de fenêtre (8, 8) voisines les unes des autres une baguette d'occultation dont la surface extérieure se trouve dans un plan avec les surfaces extérieures des vitres de fenêtre (8, 8).
